# EUROPEAN PATENT SPECIFICATION

(11) **EP 1 844 248 B1**
(45) Date of publication and mention of the grant of the patent: **04.04.2018**
(21) Application number: 06701551.1
(22) Date of filing: 02.02.2006
(51) Int. Cl.: F16F 7/104, F16F 15/02

(54) **A DEVICE FOR REDUCING VIBRATIONS AND SOUNDS**
VORRICHTUNG ZUR REDUZIERUNG VON VIBRATIONEN UND GERÄUSCHEN
DISPOSITIF PERMETTANT DE REDUIRE LES VIBRATIONS ET LES SONS

(30) Priority: 02.02.2005 SE 0500245
(43) Date of publication of application: 17.10.2007
(73) Proprietor: A2 Vibcon AB, 252 24 Helsingborg (SE)
(72) Inventor: GUSTAVSSON, Mats, S-252 50 Helsingborg (SE)
(74) Representative: Bjerkéns Patentbyrå KB (Stockholm)
(86) International application number: PCT/SE2006/000154
(87) International publication number: WO 2006/083223

(56) References cited:
- EP-A1- 0 098 657
- EP-A2- 0 922 877
- WO-A-99/63219
- DE-A1- 2 036 979
- DE-A1- 4 239 504
- US-A- 3 548 972
- US-A- 3 552 694
- US-A- 5 954 169
- US-A- 6 045 090
- US-A1- 2004 185 941

## Description

### THE BACKGROUND OF THE INVENTION AND PRIOR ART

The present invention refers to a device for reducing vibrations and sounds in a structure according to the preamble of claim 1.

In many various technical applications, such as in aircraft, motor vehicles, ships, various machines and industrial plants, it is desirable to reduce vibrations and sounds. Such vibrations or sounds can have one or several main fundamental frequencies. In aircraft, at least one motor speed, which offers an economically advantageous balance between fuel cost and speed, is frequently utilized. This motor speed results in vibrations and sounds with a relatively well defined fundamental frequency. In order to reduce these vibrations, it is known to mount a large number of vibration absorber elements. The basic principal of these vibration absorber elements is to create a resonant system having a mass and spring connected to the object or the structure from which the vibration energy is to be absorbed. These vibration absorber elements are passive and tuned for an efficient absorption of vibrations and sounds having this defined fundamental frequency. US-A-2004/0134733 discloses such a passive vibration absorber.

In various aircraft contexts, for instance propeller-driven aircrafts, two or several motor speeds are frequently used during flight for optimising performance, fuel consumption or comfort at various flight states. These various motor speeds result in vibrations and sounds with two or several relatively well defined fundamental frequencies. The known passive vibration absorber elements give a poor effect since they merely operate against one frequency.

In order to solve this problem, it is known to use two different vibration absorber elements, which are tuned to a respective defined frequency. However, this increases the required quantity of absorber elements in an undesired manner. Furthermore, the absorber elements which do not respond to the actual frequency may instead result in an amplification of vibrations and sounds. Furthermore,it has been proposed to use instead adjustable absorber elements, i.e. vibration absorber elements which are adjustable to operate against several different frequencies. These elements require some kind of electric motor or any similar adjustment member for providing the desired adjustment. Furthermore, extensive wiring and control equipment for the adjustment of the absorber elements are required. One example of such an adjustable absorber element is disclosed in US-A-5,954,169. More specifically, this document discloses a vibration absorber having a tuned mass which by means of a motor is displacebly provided in relation to a flexible plate. Other examples of adjustable absorber elements are disclosed in EP-A-922 877 and US-A-3,487,888. A further tuned mass damper is disclosed in DE 42 39 504 A1.

### SUMMARY OF THE INVENTION

The object of the invention is to provide a simple vibration absorber which is arranged to operate against different frequencies.

This object is achieved by the device initially defined, which is characterized in that the spring element has a different rigidity with respect to the two main axes, and that the spring element, by means of the rotary bearing, is rotatable around an axis of rotation, which is perpendicular to the two main axes, to an optimum position for different operation states.

By such a device, a resonant vibration absorber is achieved, which thanks to the rotatable spring element will be adaptive. The spring element will adjust itself to such a rotary position that a maximum vibration amplitude is achieved for the swinging mass of the spring element at vibration excitation at, or in the proximity of, one of the resonance frequencies of the device. By means of the invention, a simple device which without any actuating members can absorb two different vibration frequencies is thus achieved.

According to an embodiment of the invention, the spring element has two spring portions. The spring portions may then be positioned on a respective side of the rotary bearing. For instance, the spring element may be manufactured in one piece extending through and being connected to the rotary bearing in such a way that the two spring portions extend in opposite directions from the rotary bearing. The spring portions may also be formed by two separate spring portions. Furthermore, the device may advantageously comprise two weight elements, which are connected to a respective one of said spring portions and form a dynamic mass for the respective spring portion.

According to a further embodiment of the invention, the device comprises at least one further spring element, which by means of a further rotary bearing is connected to an outer end of the spring element and rotatable in relation to the spring element. By means of two such spring elements, which each may adjust itself to two positions, a device is achieved, which is adjustable to four different combinations and which thus can adapt itself to four frequencies. Furthermore, the device may comprise at least two further spring elements, which by means of two further rotary bearings are connected to an outer end of a respective one of said spring portions and rotatable in relation to the respective spring portion. The device may advantageously comprise two weight elements, which are connected to a respective one of said further spring elements and form a dynamic mass for the respective further spring element.

According to a further embodiment of the invention, the spring element is geometrically designed in such a way that the desired rigidity along the two main axes is achieved, for instance through the emergence of a none-homogeneous distribution of stresses. The spring element may for instance have a different width along the two main axes.

According to another embodiment of the invention, the spring element is manufactured in an orthotropic material, i.e. a material which has different properties in two orthogonal directions.

According to a further embodiment of the invention, the spring element is designed to permit an energy-absorbing spring movement through shearing of the spring element.

According to a further embodiment of the invention, the spring element is designed to permit an energy-absorbing spring movement through longitudinal deformation of the spring element. Advantageously, the spring element may then comprise two springs, which extend substantially perpendicularly in relation to each other along the two main axes and are connected to the weight element. Furthermore, the springs may be connected to the rotary bearing.

According to a further embodiment of the invention, the spring element is designed to permit an energy-absorbing spring movement through bending of the spring element. Advantageously, the spring element may then be designed as an elongated rod extending along the axis of rotation.

### BRIEF DESCRIPTION OF THE DRAWINGS

The present is now to be explained more closely by means of a description of various embodiments and with reference to the drawings attached hereto.
- Fig. 1: discloses a side view of a first embodiment of a device according to the invention in a first position.
- Fig. 2: discloses a side view of the device in Fig. 1 in a second position.
- Fig. 3: discloses a side view of a second embodiment of a device according to the invention.
- Fig. 4: discloses a side view of a third embodiment of a device according to the invention.
- Fig. 5: discloses a cross-section through a spring element along the line V-V in Fig. 3.
- Fig. 6: discloses a cross-section through a spring element having an alternative design.
- Fig. 7: discloses a side view of a fourth embodiment of a device according to the invention.
- Fig. 8: discloses a side view of a fifth embodiment of a device according to the invention.

### DETAILED DESCRIPTION OF VARIOUS EMBODIMENTS OF THE INVENTION

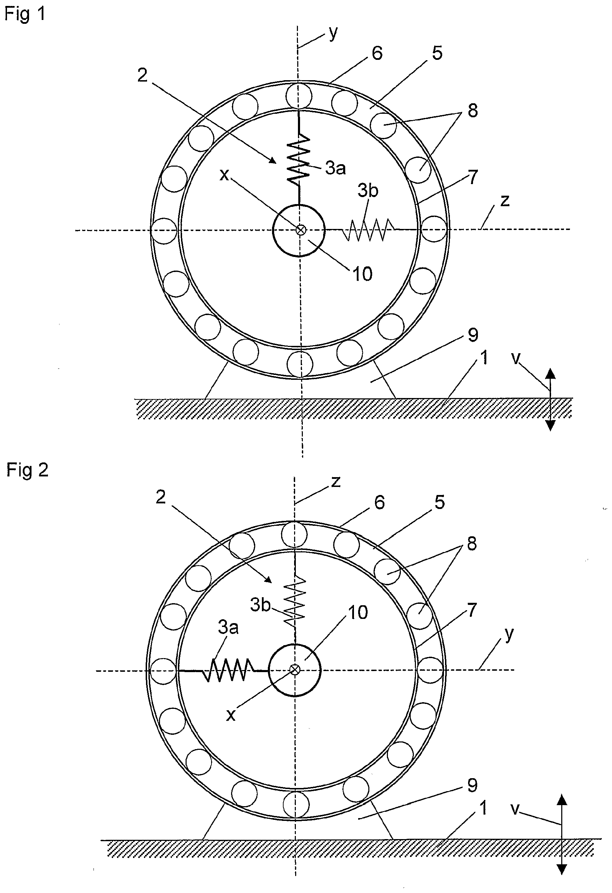

Figs. 1 and 2 disclose a first embodiment of a device according to the invention for reducing vibrations and sounds in a structure 1. This structure 1 may be a vehicle, for instance an aircraft or a ship, or any stationary structure, for instance a building, a machine tool or any other structure where it is desirable to reduce vibrations.

The device according to the first embodiment comprises a spring element 2, which extends along two main axes y and z. The main axes y and z are perpendicular to each other. Furthermore, the spring element 2 has, in the first embodiment, two spring 3a, 3b, which extend along the respective main axis y, z and permit an energy-absorbing spring movement through a longitudinal deformation of the spring 3a, 3b along the respective main axis y, z. The two springs 3a, 3b have different rigidity and different spring constant along the respective main axis y, z. The resonance frequency of the two springs 3a, 3b will thus be different.

The spring element 2 is rotatable around an axis of rotation x, which is perpendicular to the two main axes y and z by means of a rotary bearing 5, which is connected to the structure 1. The rotary bearing 5 is in the embodiment disclosed a roller bearing, which comprises an outer ring 6 and an inner ring 7 that is rotatable in relation to the outer ring 6 by means of balls or rolls 8. The rotary bearing 5 may also be realized by other kinds of bearings, for instance slide bearings. In the embodiment disclosed, the outer ring 6 is connected to the structure by means of a schematically disclosed attachment 9. Consequently, the inner ring 7 is rotatable in relation to the structure 1.

The springs 3a, 3b of the spring element 2 are with a respective outer end connected to the inner ring 7 and extend radially inwardly from the inner ring 7 towards a centre of the device. In this centre there is a weight element 10, which is connected to the respective inner end of the springs 3a, 3b and which forms a dynamic mass. It is to be noted that it is also possible to let each spring 3a and 3b comprise two springs extending along a common line and being provided on a respective side of the weight element 10 and connected to a respective diametrically opposite point of the inner ring 7.

The device according to the first embodiment is self-adaptable to absorb two different vibration frequencies. In Fig. 1, the spring element 2 is adjusted in such a way that the spring 3a with the first main axis y is parallel to the vibration direction v. The structure 1 then vibrates with a frequency F_{y} = (k_{y}/m)^{½}/(2π), wherein k_{y} corresponds to the spring constant of the spring 3a.

In Fig. 2, the spring element 2 is rotated 90° and is thus adjusted in such a way that the spring 3b with the second main axis z is parallel to the vibration direction v. The structure 1 then vibrates with a frequency F_{z} = (k_{z}/m)^{½}/(2π), wherein k_{z} corresponds to the spring constant of the spring 3b.

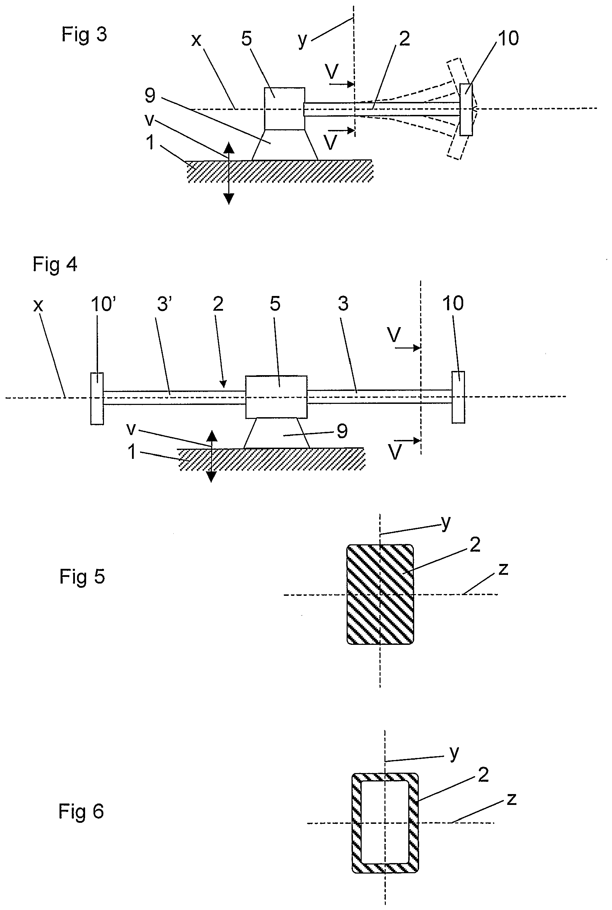

Fig. 3 discloses a second embodiment of the invention. Elements having substantially the same function have been provided with the same reference signs in all described embodiments. The device according to the second embodiment comprises a spring element 2 which extends along two main axes y and z, which are perpendicular to each other and parallel to a cross-section through the spring element 2. The spring element 2 is thus designed as an elongated rod having a first longitudinal extension in a direction x and a transversal extension along the two main axes, see Figs. 5 and 6. The spring element 2 is designed to permit an energy-absorbing spring movement through bending of the spring element 2 as is illustrated in Fig. 3 by dashed lines. Furthermore, the spring element 2 has different rigidity and different with respect to the two main axes y and z. In the second embodiment disclosed, this different rigidity is achieved by means of a different geometrical design along the two main axes y, z, and more specifically by the cross-section being wider along the main axis y then along the main axis z, see Figs. 5 and 6. However, it is possible to achieve this different rigidity in another manner than by means of a geometrical design, for instance the spring element may be manufactured in an orthotropic material having different material properties along the two main axes y, z.

Furthermore, the spring element 2 is rotatable around an axis x of rotation, which is perpendicular to the two main axes y and z, by means of a rotary bearing 5, which is arranged to be connected to the structure 1 via an attachment 9. The rotary bearing 5 may be of substantially the same kind as in the first embodiment. In the second embodiment, the spring element 2 is also connected to the inner ring 7 of the rotary bearing 5 and thus rotatable in relation to the outer ring 6 and the structure 1. The device also comprises a weight element 10, which is fixedly connected to the spring element 2 and forms a dynamic mass.

Fig. 4 discloses a third embodiment of the invention, which differs from the second embodiment in that the spring element 2 has two spring portions, which in the third embodiment have been given the reference signs 3 and 3'. The two spring portions 3, 3' are symmetrically positioned on a respective side of the rotary bearing 5. The spring element 2 may be designed as an elongated rod in one piece, which extends through the rotary bearing 5 and forms two spring portions 3, 3'. The two spring portions 3, 3' of the spring element 2 may also be formed by separate elongated rods, which are connected to the rotary bearing 5. Furthermore, the device according to the third embodiment comprises two weight elements 10, 10', which are connected to a respective one of said spring portions 3, 3' and form a dynamic mass for the respective spring portion. Advantageously, the spring element 2 with the associated weight element 10, 10' is symmetric with respect to the rotary bearing 5 or a central cross-sectional plane of the rotary bearing 5.

Fig. 5 discloses a cross-section through the elongated spring element 2 in Figs. 3 and 4. The spring element 2 is in Fig. 5 solid, but has different geometrical design along the two main axes y, z. Fig. 6 discloses a variant where the elongated spring element 2 is formed by a hollow elongated rod having different geometrical design along the two main axes y, z.

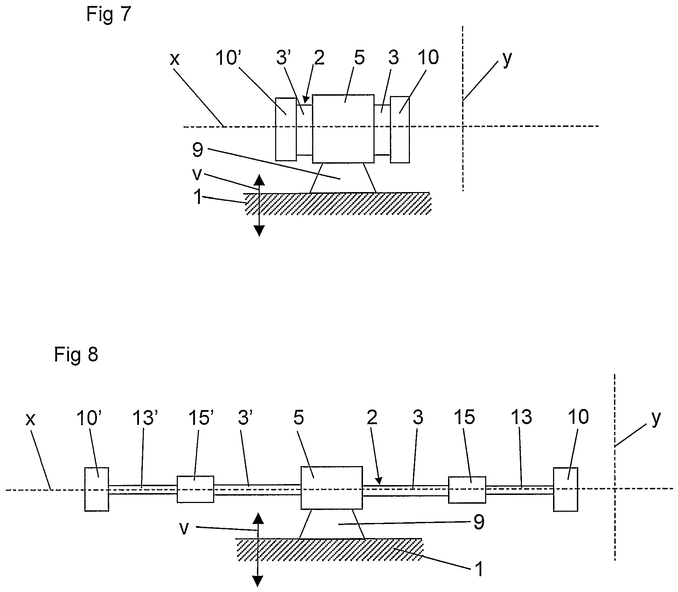

Fig. 7 discloses a fourth embodiment of the invention, which differs from the third embodiment in that the spring element 2 is designed to permit an energy-absorbing spring movement through shearing of the spring element 2. Also in Fig. 7, the spring element 2 comprises two spring portions 3, 3', which extend from the rotary bearing 5 in a respective direction along the axis x of rotation. Each spring portion 3, 3' is connected to a weight 10, 10', which is located at the outer end of the spring portions 3, 3'. The spring element 2 is in this case manufactured in a material, for instance any rubber-like material, which permits a shearing of the material in a direction transversally to the axis x of rotation, wherein the spring element 2 has different rigidity against shearing with respect to the two main axes y, z. Also in this embodiment, the spring element 2 may be geometrically designed in such a way that the desired rigidity along the two main axes y, z is achieved, for instance in that the spring element 2 has a different width along the two main axes y, z. The spring element 2 gives, in the two rotary positions, a different shearing stress distribution along the two main axes, which results in the different rigidity. The spring element 2 may also be manufactured in an orthotropic material.

Fig. 8 discloses a fifth embodiment of the invention which differs from the remaining embodiments, especially the third embodiment, in that the device comprises two further spring elements 13, 13', which by means of a respective further rotary bearing 15, 15' are connected to a respective outer end of the spring element 2, i.e. the outer end of a respective spring portion 3, 3'. The two further spring elements 13, 13' are by means of the further rotary bearings 15, 15' rotatable in relation to the spring element 2 and the respective spring portion 3, 3'. Furthermore, the device according to the fifth embodiment comprises two weight elements 10, 10', which are connected to a respective one of the further spring elements 13, 13' and form a dynamic mass for the respective further spring element 13, 13'.

The further spring elements 13, 13' are designed as a respective elongated rod, which extend along the axis of rotation x and are designed to permit an energy-absorbing spring movement through bending of the respective further spring element 13, 13'.

The spring element 2 then forms a first spring stage and the further spring elements 13, 13' a second spring stage. According to the fifth embodiment, a device is achieved, which can be adapted to 2², i.e. 4 different frequencies. It is to be noted that in principle it is possible to provide further spring elements rotatably connected to the outer ends of the further spring elements 13, 13'. In such a way the number of spring stages can be further increased, wherein the device may be adapted to 2^{N} different frequencies, where N is the number of spring stages.

Also the fourth embodiment, which is disclosed in Fig. 7 may then in a corresponding manner as the fifth embodiment be modified by further spring elements, which are designed to permit an energy-absorbing spring movement through shearing of the further spring elements. Also in the fourth and fifth embodiments, the spring element 2 with the associated weight element 10, 10' is advantageously symmetrical with respect to the rotary bearing 5 or a central cross-sectional plane of the rotary bearing 5.

The device according to the invention will thus by itself provide a rotation of the spring element 2 around the axis of rotation x to an optimum position for different operation states. This adaptation takes place spontaneously without any particular forced rotation of the spring element thanks to the fact that the spring element 2 strive to reach resonance. According to a variant of the invention, some kind of adjustment member may be provided in order to achieve the desired rotation.

In this description, merely the fundamental frequency for the spring element 2 with the associated weight element 10, 10' has been considered, i.e. a spring movement where all spring elements 2, 13, 13', all weight elements 10, 10' and possible further rotary bearings 15, 15' move in phase. Furthermore, it is assumed that the devices according to Figs. 4, 7 and 8 are symmetric around the rotary bearing 5. In a more advanced description of the function of the device, a plurality of natural frequencies and associated natural frequency shapes will be identified. Certain of these may be undesired and their negative effect may be limited or eliminated by a changing of the geometry and/or the choice of material. Other resonances in addition to the fundamental resonance may be used, for instance for simultaneous reduction of a fundamental tune and overtunes to a vibration.

The invention is not limited to the embodiments disclosed but may be varied and modified within the scope of the following claims.

## Claims

1. A device for reducing vibrations and sounds in a structure (1), comprising
an attachment (9), which is arranged to be connected to the structure (1),
a rotary bearing (5), which comprises an inner ring (7) and an outer ring (8) connected to the attachment (9),
at least one spring element (2), which is connected to the inner ring (7) and extends along two main axes (y, z) which are perpendicular to each other, and
at least one weight element (10), which is connected to the spring element (2) and forms a dynamic mass,
**characterized in that** the spring element (2) has a different rigidity with respect to the two main axes (y, z), and
that the spring element (2), by means of the rotary bearing (5), is rotatable around an axis (x) of rotation, which is perpendicular to the two main axes (y, z), to an optimum position for different operation states.

2. A device according to claim 1, **characterized in that** the spring element (2) has two spring portions (3, 3').

3. A device according to claim 2, **characterized in that** the spring portions (3, 3') are positioned on a respective side of the rotary bearing (5).

4. A device according to claim 4, **characterized in that** the device comprises two weight elements (10, 10), which are connected to a respective one of said spring portions (3, 3') and form a dynamic mass for the respective spring portion.

5. A device according to any one of the preceding claims, **characterized in that** the device comprises at least one further spring element (13, 13'), which by means of a further rotary bearing (15, 15') is connected to an outer end of the spring element (2) and rotatable in relation to the spring element (2).

6. A device according to claim 3, **characterized in that** the device comprises at least two further spring elements (13, 13'), which by means of two further rotary bearings (15, 15') are connected to an outer end of a respective one of said spring portions (3, 3') and rotatable in relation to the respective spring portion (3, 3').

7. A device according to claim 6, **characterized in that** the device comprises two weight elements (10, 10'), which are connected to a respective one of said further spring elements (13, 13') and form a dynamic mass for the respective further spring element (13, 13').

8. A device according to any one of the preceding claims, **characterized in that** the spring element (2) is geometrically designed in such a way that the desired rigidity along the two main axes (y, z) is achieved.

9. A device according to any one of the preceding claims, **characterized in that** the spring element (2) has a different width along the two main axes (y, z).

10. A device according to any one of the preceding claims, **characterized in that** the spring element (2) is manufactured in an orthotropic material.

11. A device according to any one of the preceding claims, **characterized in that** the spring element (2) is designed to permit an energy-absorbing spring movement through shearing of the spring element.

12. A device according to any one of claims 1 to 10, **characterized in that** the spring element (2) is designed to permit an energy-absorbing spring movement through longitudinal deformation of the spring element.

13. A device according to claims 2 and 12, **characterized in that** the spring element (2) comprises two springs (3a, 3b), which extend substantially perpendicularly in relation to each other along the two main axes (y, z) and are connected to the weight element (10).

14. A device according to claim 13, **characterized in that** the springs (3a, 3b) are connected to the rotary bearing (5).

15. A device according to any one of claims 1 to 10, **characterized in that** spring element (2) is designed to permit an energy-absorbing spring movement through bending of the spring element.

16. A device according to claim 15, **characterized in that** the spring element (2) is designed as an elongated rod extending along the axis (x) of rotation.

## Patentansprüche

1. Vorrichtung zur Reduzierung von Schwingungen und Geräuschen in einer Struktur (1), umfassend:
eine Befestigung (9), die angeordnet ist, um mit der Struktur (1) verbunden zu werden,
ein Drehlager (5), das einen Innenring (7) und einen Außenring (8) umfasst, der mit der Befestigung (9) verbunden ist, wenigstens ein Federelement (2), das mit dem Innenring (7) verbunden ist und sich entlang von zwei Hauptachsen (y, z) erstreckt, die senkrecht zueinander sind, und
wenigstens ein Gewichtselement (10), das mit dem Federelement (2) verbunden ist und eine dynamische Masse bildet,
**dadurch gekennzeichnet, dass** das Federelement (2) in Bezug auf die zwei Hauptachsen (y, z) eine unterschiedliche Steifigkeit aufweist, und
dass das Federelement (2) mittels des Drehlagers (5) um eine Drehachse (x), die senkrecht zu den zwei Hauptachsen (y, z) ist, in eine für verschiedene Betriebszustände optimale Position drehbar ist.

2. Vorrichtung nach Anspruch 1, **dadurch gekennzeichnet, dass** das Federelement (2) zwei Federabschnitte (3, 3') aufweist.

3. Vorrichtung nach Anspruch 2, **dadurch gekennzeichnet, dass** die Federabschnitte (3, 3') an einer jeweiligen Seite des Drehlagers (5) angeordnet sind.

4. Vorrichtung nach Anspruch 4, **dadurch gekennzeichnet, dass** die Vorrichtung zwei Gewichtselemente (10, 10) umfasst, die mit einem jeweiligen der Federabschnitte (3, 3') verbunden sind und eine dynamische Masse für den jeweiligen Federabschnitt bilden.

5. Vorrichtung nach einem der vorhergehenden Ansprüche, **dadurch gekennzeichnet, dass** die Vorrichtung wenigstens ein weiteres Federelement (13, 13') umfasst, das mittels eines weiteren Drehlagers (15, 15') mit einem äußeren Ende des Federelements (2) verbunden ist und in Bezug auf das Federelement (2) drehbar ist.

6. Vorrichtung nach Anspruch 3, **dadurch gekennzeichnet, dass** die Vorrichtung wenigstens zwei weitere Federelemente (13, 13') umfasst, die mittels zweier weiterer Drehlager (15, 15') mit einem äußeren Ende eines jeweiligen der Federabschnitte (3, 3') verbunden sind und in Bezug auf den jeweiligen Federabschnitt (3, 3') drehbar sind.

7. Vorrichtung nach Anspruch 6, **dadurch gekennzeichnet, dass** die Vorrichtung zwei Gewichtselemente (10, 10') umfasst, die mit einem jeweiligen der weiteren Federelemente (13, 13') verbunden sind und eine dynamische Masse für das jeweilige weitere Federelement (13, 13') bilden.

8. Vorrichtung nach einem der vorhergehenden Ansprüche, **dadurch gekennzeichnet, dass** das Federelement (2) geometrisch derart ausgestaltet ist, dass die gewünschte Steifigkeit entlang der zwei Hauptachsen (y, z) erzielt wird.

9. Vorrichtung nach einem der vorhergehenden Ansprüche, **dadurch gekennzeichnet, dass** das Federelement (2) entlang der zwei Hauptachsen (y, z) eine unterschiedliche Breite aufweist.

10. Vorrichtung nach einem der vorhergehenden Ansprüche, **dadurch gekennzeichnet, dass** das Federelement (2) aus einem orthotropen Material hergestellt ist.

11. Vorrichtung nach einem der vorhergehenden Ansprüche, **dadurch gekennzeichnet, dass** das Federelement (2) dafür ausgelegt ist, eine energieabsorbierende Federbewegung durch Scheren des Federelements zu erlauben.

12. Vorrichtung nach einem der Ansprüche 1 bis 10, **dadurch gekennzeichnet, dass** das Federelement (2) dafür ausgelegt ist, eine energieabsorbierende Federbewegung durch eine Längsverformung des Federelements zu erlauben.

13. Vorrichtung nach den Ansprüchen 2 und 12, **dadurch gekennzeichnet, dass** das Federelement (2) zwei Federn (3a, 3b) umfasst, die sich im Wesentlichen senkrecht in Bezug zueinander entlang der zwei Hauptachsen (y, z) erstrecken und mit dem Gewichtselement (10) verbunden sind.

14. Vorrichtung nach Anspruch 13, **dadurch gekennzeichnet, dass** die Federn (3a, 3b) mit dem Drehlager (5) verbunden sind.

15. Vorrichtung nach einem der Ansprüche 1 bis 10, **dadurch gekennzeichnet, dass** das Federelement (2) dafür ausgelegt ist, eine energieabsorbierende Federbewegung durch Biegen des Federelements zu erlauben.

16. Vorrichtung nach Anspruch 15, **dadurch gekennzeichnet, dass** das Federelement (2) als langgestreckter Stab ausgestaltet ist, der sich entlang der Drehachse (x) erstreckt.

## Revendications

1. Dispositif pour réduire les vibrations et les sons dans une structure (1), comprenant
un élément de fixation (9), qui est agencé pour être raccordé à la structure (1),
un palier rotatif (5), qui comprend une bague interne (7) et une bague externe (8) raccordées à l'élément de fixation (9),
au moins un élément de ressort (2), qui est raccordé à la bague interne (7) et s'étend le long de deux axes principaux (y, z) qui sont perpendiculaires l'un à l'autre, et
au moins un élément de poids (10), qui est raccordé à l'élément de ressort (2) et forme une masse dynamique,
**caractérisé en ce que** l'élément de ressort (2) présente une rigidité différente par rapport aux deux axes principaux (y, z), et
**en ce que** l'élément de ressort (2), au moyen du palier rotatif (5), est rotatif autour d'un axe (x) de rotation, qui est perpendiculaire aux deux axes principaux (y, z), vers une position optimale pour des états de fonctionnement différents.

2. Dispositif selon la revendication 1, **caractérisé en ce que** l'élément de ressort (2) comprend deux parties de ressort (3, 3').

3. Dispositif selon la revendication 2, **caractérisé en ce que** les parties de ressort (3, 3') sont positionnées sur un côté respectif du palier rotatif (5).

4. Dispositif selon la revendication 4, **caractérisé en ce que** le dispositif comprend deux éléments de poids (10, 10), qui sont raccordés à une partie de ressort respective desdites parties de ressort (3, 3') et forment une masse dynamique pour la partie de ressort respective.

5. Dispositif selon l'une quelconque des revendications précédentes, **caractérisé en ce que** le dispositif comprend au moins un autre élément de ressort (13, 13'), qui au moyen d'un autre palier rotatif (15, 15') est raccordé à une extrémité externe de l'élément de ressort (2) et rotatif par rapport à l'élément de ressort (2) .

6. Dispositif selon la revendication 3, **caractérisé en ce que** le dispositif comprend au moins deux autres éléments de ressort (13, 13'), qui au moyen de deux autres paliers rotatifs (15, 15') sont raccordés à une extrémité externe d'une partie de ressort respective desdites parties de ressort (3, 3') et rotatifs par rapport à la partie de ressort rotative (3, 3').

7. Dispositif selon la revendication 6, **caractérisé en ce que** le dispositif comprend deux éléments de poids (10, 10'), qui sont raccordés à un autre élément de ressort respectif desdits autres éléments de ressort (13, 13') et forment une masse dynamique pour l'autre élément de ressort respectif (13, 13').

8. Dispositif selon l'une quelconque des revendications précédentes, **caractérisé en ce que** l'élément de ressort (2) est géométriquement conçu de sorte que la rigidité souhaitée le long des deux axes principaux (y, z) soit obtenue.

9. Dispositif selon l'une quelconque des revendications précédentes, **caractérisé en ce que** l'élément de ressort (2) présente une largeur différente le long des deux axes principaux (y, z).

10. Dispositif selon l'une quelconque des revendications précédentes, **caractérisé en ce que** l'élément de ressort (2) est fabriqué à partir d'un matériau orthotrope.

11. Dispositif selon l'une quelconque des revendications précédentes, **caractérisé en ce que** l'élément de ressort (2) est conçu pour permettre un mouvement de ressort absorbant l'énergie par le biais d'un cisaillement de l'élément de ressort.

12. Dispositif selon l'une quelconque des revendications 1 à 10, **caractérisé en ce que** l'élément de ressort (2) est conçu pour permettre un mouvement de ressort absorbant l'énergie par le biais d'une déformation longitudinale de l'élément de ressort.

13. Dispositif selon les revendications 2 à 12, **caractérisé en ce que** l'élément de ressort (2) comprend deux ressorts (3a, 3b), qui s'étendent sensiblement perpendiculairement l'une par rapport à l'autre le long des deux axes principaux (y, z) et sont raccordés à l'élément de poids (10).

14. Dispositif selon la revendication 13, **caractérisé en ce que** les ressorts (3a, 3b) sont raccordés au palier rotatif (5).

15. Dispositif selon l'une quelconque des revendications 1 à 10, **caractérisé en ce que** l'élément de ressort (2) est conçu pour permettre un mouvement de ressort absorbant l'énergie par le biais d'une flexion de l'élément de ressort.

16. Dispositif selon la revendication 15, **caractérisé en ce que** l'élément de ressort (2) est conçu comme une tige allongée s'étendant le long de l'axe (x) de rotation.
